# EUROPEAN PATENT APPLICATION

(11) **EP 1 118 512 A1**
(43) Date of publication of application: **25.07.2001**
(21) Application number: 99944873.1
(22) Date of filing: 28.09.1999
(51) Int. Cl.: B60R 21/26, C06D 5/00

(54) **MOLDED BODY OF COMPOSITION OF GAS GENERATING AGENT FOR AIR BAGS**

(30) Priority: 30.09.1998 JP 27705898
(71) Applicant: Daicel Chemical Industries, Ltd., Osaka 590-8501 (JP)
(72) Inventor: YOKOYAMA, Takushi, Himeji-shi, Hyogo 670-0091 (JP); ODA, Shingo, Himeji-shi, Hyogo 671-1224 (JP); HIRATA, Norimasa, Himeji-shi, Hyogo 671-1146 (JP); YAMATO, Yo, Himeji-shi, Hyogo 671-1234 (JP); UEDA, Masayuki, Falls Church, VA 22043 (US); TAKAHORI, Takeshi, Himeji-shi, Hyogo 671-1262 (JP)
(74) Representative: Grünecker, Kinkeldey, Stockmair & Schwanhäusser Anwaltssozietät
(86) International application number: JP9905297
(87) International publication number: WO0018619

(57) **Abstract**

A molded body of a composition of a gas generating agent for air bags, having an initial bag expanding rate lower than that of a conventional molded body of this kind, adapted to eliminate the occupant damaging possibility thereof occurring due to initial expansion power of the bag, and retaining a satisfactory occupant holding capability 35-50 milliseconds after the bag expansion starting time. The molded body of a composition of a gas generating agent for air bags comprises a composition of a nonazide gas generating agent, which has a porous shape, and a value of d of 0.2-1.5 mm and a value of L/d of not smaller than 1.5, wherein L(mm) represents a length of one porous molded body, and d(mm) an inner diameter of a pore of the molded body.

## Description

### Technical Field to Which the Present Invention Belongs

The present invention relates to a molded article of a gas generating composition which is to be burned to feed a gas component for inflating an air bag system, and a gas generator system for an air bag using the molded article. More specifically, the present invention relates to a novel molded article of a gas generating composition which becomes an actuating gas in an air bag system installed to protect human bodies in automobiles, aircraft and the like, and a gas generator system for an air bag using the molded article.

### Prior Art

In order to prevent passengers from being wound or dead by being inertially struck violently against hard portions inside vehicles such as a handle or a windshield when vehicles of automobiles and the like are collided at high speed, an air bag system for preventing passengers from being struck against dangerous portions by rapidly inflating a bag with a gas has been developed. The requirements for a gas generating agent used in this air bag system are quite strict such that a time for bag inflation is quite short, usually within from 40 to 50 milliseconds and the atmosphere within the bag is non-toxic to human bodies, namely, close to an air composition in vehicles.

At present, gas generating base agents used generally for air bag systems include inorganic azide compounds, particularly, sodium azide. Sodium azide is excellent in view of a combustibility. However, an alkaline ingredient formed as by-product in the gas generation exhibits a toxicity, and the above-mentioned requirements are not satisfied in view of the safety to passengers. Further, since this compound itself exhibits a toxicity, there is a fear that it might have an adverse effect on the environment when it is discarded.

In order to compensate such drawbacks, so-called non-azide gas generating agents that replace sodium azide have been developed. For example, JP-A 3-208878 discloses a composition comprising, as essential ingredients, tetrazole, triazole or a metal salt thereof and an oxygen-containing oxidizer such as an alkali metal nitrate. Further, JP-B 64-6156 and JP-B 64-6157 disclose a gas generating agent comprising a metal salt of a hydrogen-free bitetrazole compound as an essential ingredient.

Further, JP-B 6-57629 describes a gas generating agent containing a transition metal complex of tetrazole or triazole. Still further, JP-A 5-254977 discloses a gas generating agent containing triaminoguanidine nitrate, JP-A 6-239683 a gas generating agent containing carbohydrazide, and JP-A 7-61885 a gas generating agent containing cellulose acetate and a nitrogen-containing nonmetal compound such as nitroguanidine. Furthermore, the specification of US-A 5,125,684 discloses the use of nitroguanidine as an energy substance which is co-existent with from 15 to 30% of a cellulose binder. Moreover, JP-A 4-265292 discloses a gas generating composition which is a combination of tetrazole and triazole derivatives with an oxidizer and a slag-forming agent.

With respect to the gas generation behavior and the bag inflation behavior of these prior arts, the ordinary inflation behavior performance has been believed to be satisfactorily safe because a driver's sitting position is relatively fixed on the driver side (hereinafter abbreviated as a "D side") in particular. However, as the air bag system has been widely used and it has become almost a standard equipment, the development of the art of a safer air bag system has been in demand. This is because there are various types of persons who sit on the D side, for example, a person having a high or low sitting height or a person who drives a car by holding on to a handle, as well as various modes on passenger sides (hereinafter abbreviated as a "P side") such as the assistant driver's seat in case a person drives with children.

An air bag system having a conventional inflation behavior performance is also useable. However, for providing a safer air bag system, such an art has been demanded that an inflation speed at an initial stage, for example, an inflation speed within 10 milliseconds from the start-up of the gas generation is rendered lower than the conventional speed on the D side to eliminate a possible damage owing to the bag inflation force at the initial stage and after from 30 to 50 milliseconds a satisfactory ability of confining passengers is maintained. Further, an art of controlling a gas generation behavior also on the P side has been demanded.

With respect to such arts, JP-A 8-207696 discloses a technique in which a gas is generated at two stages, a bag is inflated relatively slowly at the initial stage of actuation and the gas generation is conducted rapidly at the second stage. However, in this type of the art, the structure inside the gas generator becomes intricate, the size of the container is increased, and it involves the high cost at the same time.

Thus, an art in which a molded article of a gas generating composition alone controls a gas generation behavior and consequently a bag inflation speed is controlled has not been disclosed yet. An art in which a structure is simple with a low cost and a molded article of a gas generating composition alone can control a gas generation behavior has been in high demand.

In addition, a nitrogen-containing organic compound has generally a drawback that in the burning, it has a higher heat amount than an azide compound when using an oxidizer at a rate sufficient to generate oxygen in a chemical equivalent amount, namely an amount required for burning carbon, hydrogen and other elements of the molecule in the compound. In the air bag system, not only the performance of the gas generating agent but also the size of the system itself which does not disturb the usual driving is indispensable. However, when the heat amount of the gas generating agent in the burning is large, additional parts for removal of heat are required in designing a gas generator, making it impossible to downsize the gas generator itself. It is also possible to decrease the heat amount by selecting the type of the oxidizer. However, a linear burning rate is decreased correspondingly to this, which results in reducing an ability to generate a gas.

The gas generating composition formed of the nitrogen-containing compound has generally possessed, as stated above, the drawback that in the burning, it has a higher heat amount, a higher combustion temperature and a lower linear burning rate than a gas generating composition containing an inorganic azide compound when using an oxidizer at a rate sufficient to generate oxygen in a chemical equivalent amount, namely an amount required for burning carbon, hydrogen and other elements to be oxidized in the molecule of the nitrogen-containing compound.

Thus, the problem posed by the high combustion temperature is that an alkaline mist generated from an oxidizer component of a composition is released outside an inflator along with high-temperature heating particles newly generated in a cooling portion by erosion of a coolant including a chemical reaction of the alkaline mist and a stainless steel coolant often used generally. However, so long as the alkaline mist generated from the oxidizer component and the high-temperature heating particles newly generated are formed into a slag within a combustion chamber before reaching the cooling portion so as to be able to confine the same inside the combustion chamber, an inflator system can be established with a small amount of a coolant without causing a decisive damage to the bag because the gas has a high temperature but a low heat capacity. This can provide a smaller-sized inflator.

Non-azide gas generating compositions using various nitrogen-containing organic compounds including tetrazole derivatives have been so far studied. The linear burning rate of the compositions varies depending on the type of the oxidizer used in combination. Most of the compositions are generally those having the linear burning rate of 30 mm/sec or less.

The linear burning rate influences the shape of the gas generating composition to satisfy the desired properties. The combustion time of the gas generating composition is determined by the thickness direction of the smallest thickness of the thick portion in one shape of the gas generating composition and the linear burning rate of the gas generating composition. The bag expansion time required for the inflator system is between approximately 40 and 60 milliseconds.

In order that the gas generating composition in the form of a pellet or a disk which is often used is completely burned within this time, for example, a time of 100 milliseconds is required when a thickness is 2 mm and a linear burning rate is 20 mm/sec. Thus, no desired inflator performance can be obtained. Accordingly, the performance cannot be satisfied unless a thickness is approximately 1 mm in a gas generating composition with a linear burning rate of approximately 20 mm/sec. When the linear burning rate is approximately 10 mm/sec or there about or less, it is indispensable that the thickness of the thick portion is smaller.

A method in which oxidizers such as sodium nitrate and potassium perchlorate are used in combination for improving the linear burning rate has been known. However, sodium oxide is discharged outside the inflator in sodium nitrate and potassium chloride in potassium perchlorate respectively in the form of liquid or solid fine particles. It is quite difficult to control the amounts of these compounds discharged to permissible levels upon using an ordinary filter in the absence of a slag-forming agent.

In order that the thickness of the thick portion is satisfied in the form of a pellet or a disk with the linear burning rate of approximately 10 mm/sec or there about or less, it is indispensable that the thickness is approximately 0.5 mm or less. However, it is actually almost impossible to produce a gas generating composition in the form of a pellet or a disk in a state which withstands long-term vibration of automobiles with industrial stability.

### Disclosure of the Present Invention

The present inventors have assiduously conducted investigations to solve the foregoing problems, and have consequently found that the problems can be solved by controlling a physical shape of a molded article of a gas generating composition, further that a gas generating composition having a low linear burning rate is molded so as to be able to burn the same within a predetermined period of time, and that its performance can be applied well as a gas generating agent for an air bag. These findings have led to the completion of the present invention.

The present invention is to provide a molded article of a gas generating composition for an air bag (hereinafter referred to as a "molded article (I) of a gas generating composition") which is a molded article formed of a non-azide gas generating composition, characterized in that it has a shape having a hole or holes, and when a length of one molded article having a hole is L (mm) and an inner diameter of the hole of the molded article is d (mm), the value of d is between 0.2 and 1.5 (mm) and the value of L/d is 1.5 or more.

In the invention of the molded article (I) of the gas generating composition, the "shape having a hole or holes" refers to a "shape such that a through hole or a non-through hole (hole that does not penetrate and corresponds to, for example, a depression in the surface of the molded article of the gas generating composition) is present in the molded article of the gas generating agent". The number of the through hole or the non-through hole may be one or two or more. Further, one molded article may have both the through hole and the non-through hole.

Further, the present invention is to provide a molded article of a gas generating composition for an air bag (hereinafter referred to as a "molded article (II) of a gas generating composition"), wherein the gas generating composition is molded into a cylindrical shape having one or two or more holes, and a relationship of a linear burning rate r (mm/sec) of the gas generating composition at the pressure of 70 kgf/cm² and a thickness W (mm) of the molded article is within the range represented by 0.005 ≤ W/(2^{.}r) ≤ 0.1.

In the invention of this molded article (II) of the gas generating composition, the "cylindrical shape having one or two or more holes" refers to a "single-hole cylindrical shape having one through hole, a porous cylindrical shape having two or more through holes or a structure (not a cylindrical shape) having one or two or more non-through holes".

### Brief Description of the Drawings

Fig. 1 is a pressure-time curve obtained in a tank test of Example 1.

Fig. 2 is a pressure-time curve obtained in a tank test of Comparative Example 1.

Fig. 3 is a schematic layout of holes of a molded article (I) of a chemical gas generating agent having seven holes.

Fig. 4 is a pressure-time curve obtained in a tank test using a molded article (I) of a chemical gas generating agent having seven holes.

Fig. 5 is a longitudinal sectional view showing an example of a gas generator for an air bag using the molded article (I) of the gas generating composition in the present invention.

Fig. 6 shows an appearance of the molded article (II) of the gas generating agent in the present invention in which L is a length, R an outer diameter and d an inner diameter.

### Preferred Embodiment of the Present Invention

The molded article (I) of the gas generating composition in the present invention is a molded article formed of a non-azide gas generating composition, characterized in that it has a shape having a hole or holes, and when a length of one molded article having a hole is L (mm) and an inner diameter of the hole of the molded article is d (mm), the value of d is between 0.2 and 1.5 (mm) and the value of L/d is 1.5 or more.

One of the physical characteristics of the molded article (I) in the present invention is that it has a shape having a hole. In case of having a single through hole, the value of the inner diameter d of the hole is between 0.2 and 1.5 (mm), and the value of L/d is 1.5 or more, by whereby the ratio of the inner surface area to be ignited at the initial stage in the overall inner surface area of the inner diameter portion is controlled when the molded article having the hole is ignited with a heat energy of an ignition system. The portion which is not ignited at the initial stage is immediately shifted in an ignited state by a heat amount of the ignited portion. For this reason, it is possible to control only the initial stage of ignition without prolonging a time required until the maximum pressure is reached. In this respect, it shall be identified that the art of the present invention is basically different from a so-called depowering technology in which the overall gas generation output is somewhat decreased to control the initial stage.

Further, when the molded article (I) has one or two or more non-through holes, the value of the inner diameter d of the hole is between 0.1 and 1.5 mm, and L/D is 1.5 or more. The depth of the hole is preferably between 0.5 and 29 mm.

Accordingly, the molded article (I) having the hole in the present invention may have a single hole, namely one through hole, or one or two or more non-through holes. The shape thereof is not limited so long as the foregoing results of the control are consequently provided. However, in view of the molding cost, the shape having the single hole is preferable. The value of the inner diameter d of the hole is between 0.2 and 1.5 mm, preferably between 0.4 and 1.0 mm. When the value of d is less than 0.2 mm, the initial ignition area inside the molded article having the hole by the heat energy of the ignition system is insufficient, and no desired results are obtained. When it exceeds 1.5 mm, the heat energy reaches the overall inner surface of the molded article having the hole, and the initial ignition and combustion area is consequently increased, with the result that no desired gas generation output is obtained.

Further, the L/d value of the molded article (I) having the hole in the present invention is 1.5 or more. When L is too long, the desired filling efficiency inside the gas generator is naturally lowered. Thus, it has to be determined according to the size of the gas generator as required. The preferable range of the value of L/d is between 1.5 and 10.0, more preferably between 2.5 and 5.0, further more preferably between 3.0 and 5.0. When the L/d value is less than 1.5, the gas generation behavior cannot be controlled as stated above.

The length of the molded article (I) having the hole in the present invention is not particularly limited. It is preferably between 1.5 and 30 mm. Further, the outer diameter D is not particularly limited either. In the case of the shape having the single hole, it is preferably between 1.5 and 5.0 mm, between 2.0 and 5.0 mm or between 2.4 and 5.0 mm.

The molded article (I) of the gas generating composition in the present invention can have two or more through holes. In this case, the arrangement of the through holes is not particularly limited. In the preferred embodiment, the through holes are arranged upon contriving the stabilization of the performance of the gas generator.

It is advisable to arrange two or more holes in the cross-sectional surface of the cylindrical molded article such that the distance between the centers of the two adjacent holes is approximately equal to the distance between the centers of the two holes and the outer end of the molded article.

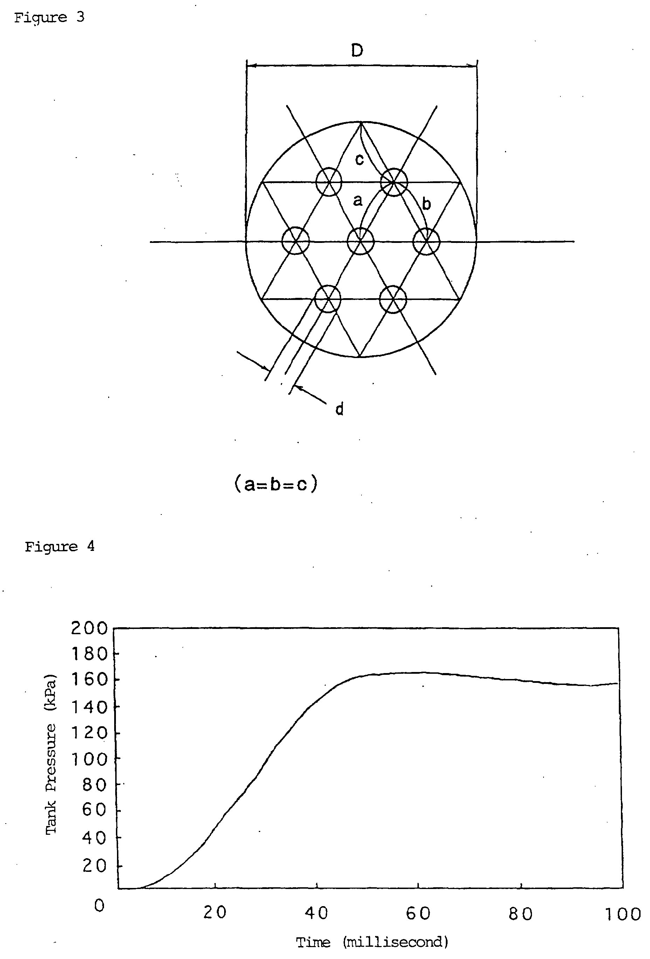

In the preferred embodiment, as shown in Fig. 3, seven through holes are formed in a cylindrical molded article having the circular section. The center of one hole among these holes is located in the center of the circle of the molded article, and the other six holes are located around the central hole. In Fig. 3, a distance (b) between the centers of the two holes arranged around the central hole is equal to a distance (c) between the centers of these two holes and the outer end of the molded article. Further, distances (a) between the center of the central hole and centers of holes arranged around the central hole are equal to one another. It is advisable that an equilateral triangle composed of (a), (b) and (a) is approximately the same as an equilateral triangle composed of (b), (c) and (c). Six equilateral triangles are arranged from the one central hole, and the centers of the six holes around the central hole are arranged on tops of the equilateral triangles.

In another example of the molded article, the central hole is encircled by surrounding eighteen holes. The number of holes and the arrangement structure can be made advantageous as stated above. The number of holes and the arrangement structure are determined in view of the easiness of the production of the gas generating agent, the production cost and the properties in combination, and these are not particularly limited.

In this case, it is advisable that the outer diameter D of the molded article having plural holes is between 4 and 50 mm, the diameter d of each through hole is between 0.4 and 1.0 mm and the length L is between 1.5 and 30 mm. In the case of the shape having plural holes, the depth of the hole is preferably between 0.5 and 29 mm. Further, since L/d varies depending on the number of holes and the value of d, it has to be determined by the number of holes and the value of d. For example, it is between 1.5 and 30.

The molded article (I) of the gas generating composition in the present invention is characterized in that when a desired maximum tank pressure is P (kPa) and a period of time from the start-up of rise of the tank pressure up to the time when the maximum tank pressure P (kPa) has been reached is T milliseconds in the tank combustion test with a gas generator using the molded article (I), the tank pressure at 0.25 x T milliseconds is adjusted to 0.25 x P (kPa) or less, preferably 0.20 x P (kPa) or less. Further, it is advisable that the tank pressure at 0.80 x T milliseconds is adjusted to 0.70 x P (kPa) or more.

When the tank pressure at 0.25 x T milliseconds exceeds 0.20 x P (kPa), especially 0.25 x P (kPa), the force of the initial bag inflation is too high. Further, when the tank pressure at 0.80 x T milliseconds is 0.70 x P (kPa) or more, the safety of passengers in the collision of automobiles can be secured more surely.

By the way, the tank combustion test in the present invention is a test conducted according to the following method.

### <Tank combustion test>

An inflator filled with a molded article (I) of a gas generating agent is fixed in an SUS (stainless steel) tank having an inner capacity of 60 liters. The tank is sealed at room temperature, and then connected with an external ignition electric circuit. A time in which to switch on the ignition electric circuit is defined as 0, and the change in the increase of the pressure inside the tank is measured for between 0 and 200 milliseconds with a pressure transducer mounted in the tank separately. Each measured data is finally plotted in a tank pressure/time curve through computer processing, and a curve for evaluating the performance of the molded article (I) of the gas generating agent is obtained. After the completion of the combustion, a part of the gas in the tank is withdrawn, and subjected to a gas analysis of CO and NOx. By the way, the maximum tank pressure in the present invention refers to a maximum pressure inside the SUS tank in this tank combustion test.

An example of evaluation of the gas generator having incorporated therein the molded article (I) of the gas generating composition in the present invention in a 60-liter tank in an atmosphere of 20 °C is shown below. This evaluation is for a molded article having an outer diameter D of 6.5 mm, a length L of 4 mm and a diameter of each hole of about 0.7 mm. The tank output curve is shown in Fig. 4. At this time, the inner pressure of the housing is adjusted to reach a maximum value 10 to 35 milliseconds after the application of the ignition current, by whereby the inflection point of the tank curve appears in this position, and a molded article of a gas generator which alleviates the influence on passengers at the initial stage of the bag expansion is provided.

A preferable embodiment of a method for producing the molded article (I) of the gas generating composition in the present invention is described below. First, a mass of a gas generating composition is prepared by a kneading procedure using a solvent that dissolves a binder according to a particle size and a bulk density of a starting material. As the solvent, a substance which dissolves a binder and is appropriate for the molding has to be selected. Water can be used in the case of a water-soluble binder, and an organic solvent such as ether, ethyl acetate or acetone in the case of an organic material-soluble binder. The solvent is used in an amount appropriate for molding a desired composition. Generally, the amount is preferably between 10 and 30% by weight of an increase based on the amount of the gas generating composition. The mixing order is not particularly instructed, and the order in which the highest safety is maintained in the production will do.
Subsequently, after excess solvent is removed as required, the residue is extruded through a mold of a fixed single-hole cylindrical shape by which to form the composition mass into a single-hole cylindrical shape usually at a pressure of from 40 to 80 kg/cm², as required, from 130 to 140 kg/cm² to make a single-hole cylindrical strand. Further, before the surface of the strand becomes dry, the strand is cut to a desired length such that the value of L/d is 1.5 or more, and then dried to be able to provide a desired molded article (I).

Next, the non-azide gas generating composition used in the present invention is described. The non-azide gas generating composition used in the present invention is preferably one comprising a nitrogen-containing compound, an oxidizer, a slag-forming agent and a binder.

Examples of the nitrogen-containing compound used in the present invention is one or a mixture of two or more compounds selected from the group consisting of triazole derivatives, tetrazole derivatives, guanidine derivatives, azodicarbonamide derivatives and hydrazine derivatives. These are used either singly or in combination. Specific examples thereof can include 5-oxo-1,2,4-triazole, tetrazole, 5-aminotetrazole, 5,5'-bi-1H-tetrazole, guanidine, nitroguanidine, cyanoguanidine, triaminoguanidine nitrate, guanidine nitrate, guanidine carbonate, biuret, azodicarbonamide, carbohydrazide, carbohydrazide nitrate complex, oxalic acid dihydrazide and hydrazine nitrate complex.

Among these nitrogen-containing compounds, one or more members selected from the group consisting of tetrazole derivatives and guanidine derivatives are preferable. Especially, nitroguanidine, cyanoguanidine and 5-aminotetrazole are preferable. Nitroguanidine is most preferable from the standpoint of the small number of carbon atoms in the molecule. Nitroguanidine includes needle-crystal nitroguanidine having a low specific gravity and massive-crystal nitroguanidine having a high specific gravity. Both of these compounds may be used. However, in view of the safety in the production in the presence of a small amount of water and the easy handing, the use of nitroguanidine having a high specific gravity is more preferable.

The mixing proportion of the nitrogen-containing compound in the gas generating composition according to the present invention varies with the number of carbon element, hydrogen element and other elements to be oxidized in the molecular formula. Usually, it is preferably between 25 and 56% by weight, especially preferably between 30 and 40% by weight. The absolute value of the mixing proportion of the nitrogen-containing compound varies with the type of the oxidizer in the gas generating composition. When it is higher than the complete oxidation theoretical amount, the concentration of trace CO in the gas generated is increased. When it is the complete oxidation theoretical amount or less, the concentration of trace NOx in the gas generated is increased. Accordingly, the range in which the optimum balance of both of them is maintained is most preferable.

As the oxidizer used in the gas generating composition according to the present invention, various oxidizers may be used. An oxidizer selected from at least one member of nitrates containing a cation selected from an alkali metal and an alkaline earth metal is preferable. Oxidizers other than nitrates, namely, those which are often used in the field of an air bag inflator, such as nitrites and perchlorates can also be used. However, nitrates are preferable because the number of oxygen atoms in the nitrite molecule is reduced in comparison with nitrates and formation of a particulate mist that tends to be discharged outside the bag is reduced. Examples of nitrates containing a cation selected from an alkali metal and an alkaline earth metal include sodium nitrate, potassium nitrate, magnesium nitrate and strontium nitrate. Strontium nitrate is especially preferable.

The absolute value of the mixing proportion of the oxidizer in the gas generating composition according to the present invention varies with the type and the amount of the gas generating compound. It is preferably between 40 and 65% by weight, especially preferably between 45 and 60% by weight in relation to the CO and NOx concentrations.

The slag-forming agent of the gas generating composition according to the present invention has a function that in order to prevent an oxide of an alkali metal or an alkaline earth metal formed by decomposition of especially an oxidizer component of the gas generating composition from being discharged outside an inflator as a mist, this oxide is changed from a liquid state to a solid state and confined in a combustion chamber. An optimized slag-forming agent can be selected depending on the difference of the metal component.

A specific example of the slag-forming agent includes, at least one member selected from acid clay, silica, natural clay composed mainly of a bentonite-type or kaolin-type aluminosilicate, artificial clays such as synthetic mica, synthetic kaolinite and synthetic smectite, and talc being one type of a hydrous magnesium silicate mineral. Of these, acid clay or silica is preferable, and acid clay is especially preferable.

For example, with respect to a viscosity and a melting point of an oxide mixture composed of three components, calcium oxide generated from calcium nitrate, aluminum oxide being a main ingredient of clay and silicon oxide, the viscosity is changed from 3.1 poises to approximately 1,000 poises in the range of from 1,350°C to 1,550°C, and the melting point from 1,350°C to 1,450°C depending on the formulation. A slag formability according to the mixing ratio of the gas generating composition can be exhibited upon utilizing these properties.

The mixing proportion of the slag-forming agent in the gas generating composition according to the present invention can be changed in the range of from 1 to 20% by weight. It is preferably in the range of from 3 to 10% by weight. When it is too high, the decrease in the linear burning rate and the decrease in the gas generation efficiency are invited. When it is too low, the slag formability cannot be exhibited satisfactorily.

In the gas generating composition according to the present invention, the binder is an essential component for obtaining the desired molded article (I). Any binder can be used so long as it shows a viscosity in the presence of water and a solvent and no great adverse effect is given to the combustion behavior of the composition. Specific examples of the binder used in the present invention include polysaccharide derivatives such as carboxymethyl cellulose metal salt, hydroxyethyl cellulose, cellulose acetate, cellulose propionate, cellulose acetate butyrate, nitrocellulose and starch. A water-soluble binder is preferable in view of the safety in the production and the easy handling, and carboxymethyl cellulose metal salt, especially a carboxymethyl cellulose sodium salt is most preferable.

The mixing proportion of the binder in the gas generating composition according to the present invention is preferably between 3 and 12% by weight, more preferably between 4 and 12% by weight. The higher the proportion is, the higher the break strength of the molded article (I) becomes. However, the higher proportion results in the increase in the number of carbon element and hydrogen element of the composition and the increase in the concentration of trace CO gas, which is an incomplete combustion product of carbon element by whereby qualities of the generated gas are lowered. Thus, it is undesirable. Especially, when the proportion exceeds 12% by weight, the relative proportion of the oxidizer present has to be increased, with the result that the relative proportion of the gas generating compound is decreased and it is difficult to establish a gas generator system that can actually be used.

Further, when carboxymethyl cellulose sodium salt is used as a binder, a secondary effect is provided to improve the combustibility that a decomposition temperature of a nitrate, especially strontium nitrate having a high decomposition temperature as an oxidizer is shifted to a lower temperature side in the presence of a micro-mixing state of a molecular order of sodium nitrate caused by a metal exchange reaction with a nitrate in the production of the molded article (I) using water.

As stated above, a preferable gas generating composition used in practicing the present invention comprises:
(a) from approximately 25 to 56% by weight, preferably from 30 to 40% by weight of nitroguanidine,
(b) from approximately 40 to 65% by weight, preferably from 45 to 65% by weight of an oxidizer,
(c) from approximately 1 to 20% by weight, preferably from 3 to 10% by weight of a slag-forming agent, and
(d) from approximately 3 to 12% by weight, preferably from 4 to 12% by weight of a binder.
A most preferable composition comprises:
(a) from approximately 30 to 40% by weight of nitroguanidine,
(b) from approximately 40 to 65% by weight of strontium nitrate,
(c) from approximately 3 to 10% by weight of acid clay or silica, and
(d) from approximately 4 to 12% by weight of carboxymethyl cellulose sodium salt.

And a preferable molded article (I) of a gas generating composition in the present invention is obtained by molding a composition comprising:
(a) from approximately 25 to 56% by weight of nitroguanidine,
(b) from approximately 40 to 65% by weight of an oxidizer,
(c) from approximately 1 to 20% by weight of a slag-forming agent, and
(d) from approximately 3 to 12% by weight of a binder into a single-hole cylindrical shape.

Next, the gas generator system for use in the air bag in the present invention is described.

In the gas generator system of the present invention, it is preferable that when a desired maximum tank pressure is P (kPa) and a period of time from the start-up of rise of the tank pressure to the time when the maximum tank pressure P (kPa) has been reached is T milliseconds in the tank combustion test with the gas generator using the above-obtained molded article (I), the tank pressure at 0.25 x T milliseconds is 0.25 x P (kPa) or less, preferably 0.20 x P (kPa) or less and the tank pressure at 0.80 x T milliseconds is 0.70 x P (kPa) or more.

The gas generator according to the present invention comprises a housing having plural gas discharge ports, an ignition means installed in the housing, a gas generating means to be ignited by the ignition means and generate a combustion gas, and a combustion chamber storing the gas generating means. Preferably, it has further a filter means for cooling the combustion gas and trapping the combustion residue. More preferably, the filter means is mounted such that the outer periphery of the filter means is opposite to the inner surface of the outer peripheral wall of the housing and a clearance is provided therebetween.

In the gas generator system according to the present invention, the maximum tank pressure P (kPa) and the time T (milliseconds) that is a period of the time from the start-up of rise of the tank pressure to the time when the maximum tank pressure P (kPa) has been reached has been explained by laying stress on the basis of the gas generator system for use in the D (driver) side in which the maximum tank pressure P (kPa) is between 110 and 220 (kPa) and the time T from the start-up of rise of the tank pressure up to the maximum tank pressure (kPa) is, for example, between 30 and 65 milliseconds. However, the art of the present invention is not limited to the system for D side. It can also be applied to a gas generator system for P (passenger) side in which the maximum pressure P (kPa) is, for example, between 350 and 500 (kPa) and the time T from the start-up of rise of the tank pressure up to the maximum tank pressure P (kPa) is, for example, between 50 and 70 milliseconds.

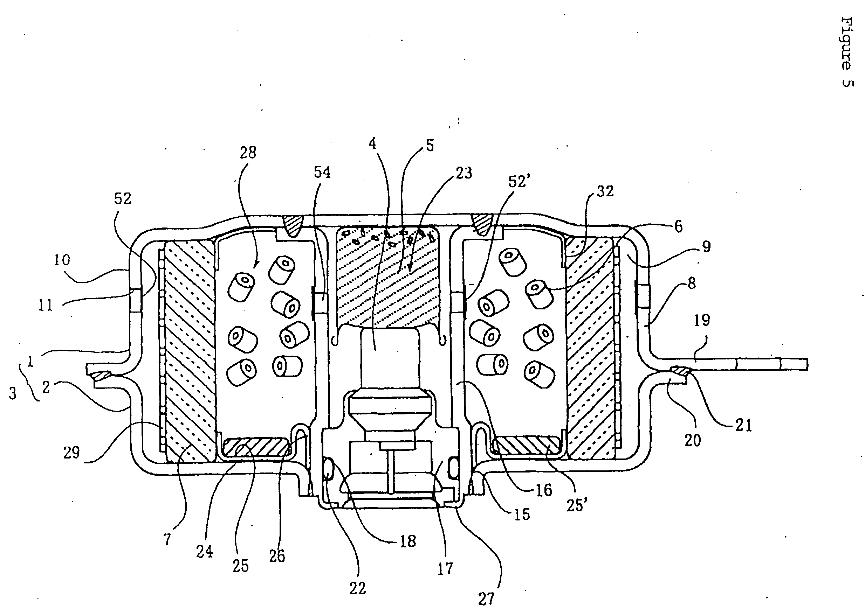

Fig. 5 is a longitudinal sectional view showing one embodiment of a gas generator for use in a D side air bag using the molded article (I) of the gas generating composition for use in the air bag in the present invention.

In Fig. 5, in the gas generator, the inside of the housing 3 comprising a diffuser shell 1 and a closure shell 2 is partitioned into two chambers, i.e. an ignition means accommodation chamber 23 and a gas generating agent combustion chamber 28 with an inner cylindrical member 16. An ignition unit 4 and an transfer charge 5 are stored as ignition means which is to be activated by impact to ignite and burn a gas generating agent in the ignition means accommodation chamber 23. The molded article (I) 6 of the gas generating composition of the present invention which is ignited and burned by the ignition means to generate a combustion gas and a nearly disk-like under plate 24 that supports the gas generating agent 6 to prevent its movement are mounted in the combustion chamber 28. A plurality of gas discharge ports 11 are formed in a peripheral wall portion 10 of the diffuser shell 1 at equal intervals in the circumferential direction, and the gas discharge port 11 is sealed with a sealing tape 52. An inner cylindrical member 16 is mounted fittingly on the central hole 15 in the closure shell 2. The respective flange portions 19, 20 of the diffuser shell 1 and the closure shell 2 are overlaid in the vicinity of the axial central cross-sectional position of the housing 3, and joined with a laser weld 21 to form the housing 3.

A crimping portion 27 is formed at the end on the side of storing the ignition unit 4 of the inner cylindrical member 16, and the ignition unit 4 is fixed with the caulking portion 27. Further, a plurality of through holes 54 arranged at equal intervals toward the combustion chamber 28 are formed in the peripheral wall of the inner cylindrical member 16, and the through hole 54 is sealed with a sealing tape 52'. Further, a coolant/filter 7 mounted in the housing 1 for purifying and cooling the gas generated by the ignition and combustion of the gas generating agent 6 is arranged around the gas generating agent 6 to define an annular chamber, namely the gas generating agent combustion chamber 28 around the inner cylindrical member 16. The coolant/filter 7 is formed by overlaying stainless steel plain weave wire mesh in the radial direction and compressing the same in the radial direction and the axial direction. Further, an outer layer 29 that functions as a means for preventing the expansion of the coolant/filter is formed outside the coolant/filter 7. A clearance 9 was formed between the outer peripheral wall 8 of the housing 3 and the coolant/filter 7, and this clearance 9 functions as a gas passage. A short pass preventing means 32 for preventing a short pass of a gas between the housing and the coolant/filter is mounted on the inner periphery of the coolant/filter 7.

By the way, on the inner periphery of the coolant/filter, it is also possible to dispose a nearly cylindrical perforated basket for protecting the filter 7 from flame caused by the combustion of the gas generating agent and preventing direct contact between the gas generating agent 6 and the filter 7. In the housing, a nearly disk-like under plate 24 for supporting the gas generating agent 6 to prevent its movement is mounted, besides the gas generating agent 6, in the gas generating agent combustion chamber 28 defined outside the inner cylindrical member 16. This under plate 24 has a circular portion 25 in contact with the gas generating agent 6 and a central hole 26 to which the outer peripheral wall of the inner cylindrical member 16 is fitted. The gas generating agent 6 supported with a cushion 25' on the circular portion 25 is prevented from being moved, and there is no fear that the gas generating agent might be crashed by vibration to change the surface area. By the way, the outer layer 29, the clearance 9 and the perforated basket are mounted as required, and can be dispensed with.

In Fig. 5, numeral 17 indicates a cylindrical collar portion having a groove 18, and numeral 22 indicates an O-ring stored in the groove 18.

Next, the molded article (II) of the gas generating composition in the present invention is described. The molded article (II) of the gas generating agent for use in the air bag in the present invention is formed by molding the gas generating composition into a cylindrical shape having one or two or more holes in which the relationship of the linear burning rate r (mm/sec) of the gas generating composition at the pressure of 70 kgf/cm² and the thickness W (mm) of the molded article is in the range represented by 0.005 ≤ W/ (2^{.}r) ≤ 0.1.

In the molded article (II) of the gas generating composition in the present invention, the "cylindrical shape having one or two or more holes" refers to, as noted above, a "single-hole cylindrical shape having one through hole, a porous cylindrical shape having two or more through holes or a having one or two or more non-through holes". Accordingly, the relationship of the linear burning rate r (mm/sec) and the thickness W (mm) of the molded article is in the range of 0.005 ≤ W/(2^{.}r) ≤ 0.1 in the case of a single cylindrical shape having one through hole, in the range of 0.005 ≤ W/(2^{.}r) ≤ 0.1 in the case of a multi-hole cylindrical shape having two or more through holes, and 0.005 ≤ W/(2^{.}r) ≤ 0.1 in the case of a structure having one or two or more non-through holes.

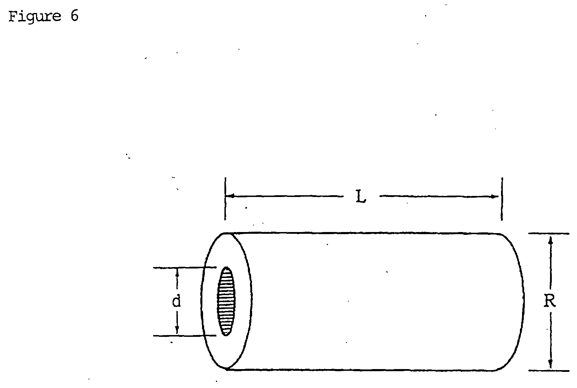

Incidentally, a single-hole cylindrical shape having one through hole has a shape having one through hole shown in Fig. 6, and the through hole may be not only straight but also curved. The porous cylindrical shape having two or more through holes is the same as a cylindrical molded article having two or more through holes (shown in, for example, Fig. 3) which is the molded article (I) of the gas generating composition. With the respect to the structure having one or two or more non- through holes, a single-hole cylindrical shape of which one end is closed, and a porous cylindrical shape having two or more through holes in which a part or the whole of the plural holes are closed are cited.

As the gas generating composition used in the production of the molded article (II) of the gas generating composition in the present invention, the gas generating composition used in the production of the molded article (I) of the gas generating composition is used. Preferably, a composition having a linear burning rate of from 1 to 12.5 mm/sec is used to suppress heat generation.

The present invention makes it possible to apply the gas generating composition having the linear burning rate of approximately 10 mm/sec or there about or less and to put the inflator system which is downsized in view of qualities of a gas generated to practical use.

Incidentally, as the nitrogen-containing organic compound contained in the gas generating composition, dicyandiamide is preferably used. Further, the amount of the nitrogen-containing organic compound in the gas generating composition varies with the number of elements constituting the nitrogen-containing compound and the molecular weight and a combination with the oxidizer and other additives. It is most preferable that the oxygen balance by the combination with the oxidizer and other additives is nearly zero. The optimum molded article (II) of the composition is obtained by adjusting the oxygen balance to the positive side or the negative side according to the concentrations of trace CO and NOx generated. For example, in the case of using dicyandiamide, the amount is preferably in the range of from 8 to 20% by weight.

As the oxygen-containing oxidizer, an oxidizer known in the field of a gas generating agent for an air bag may be used. It is basically preferable to use an oxidizer which converts a residual ingredient into a liquid or a gas and that forms a high-boiling substance so as to be able to reduce a thermal load exerted on a coolant and a filtering agent.

For example, potassium nitrate is an oxidizer generally used in a gas generating agent, and a main residual ingredient in the combustion is potassium oxide or potassium carbonate. Potassium oxide is decomposed into potassium peroxide and metallic potassium at approximately 350°C. Further, potassium peroxide has a melting point of 763°C, and it becomes liquid or gaseous while the gas generator actuates. Thus, it is undesirable in consideration of a thermal load exerted on the coolant and the filtering agent.

As a specific oxidizer which is preferably used, strontium nitrate is cited. A main residual ingredient in the combustion of strontium nitrate is strontium oxide having a melting point of 2, 430°C, and it is almost solid while the gas generator actuates.

The amount of the oxidizer is not particularly limited so long as it is an amount sufficient to completely burn the nitrogen-containing organic compound, and it can be changed as required to control the linear burning rate and the heat amount. When strontium nitrate is used as an oxidizer to dicyandiamide, it is preferably between 11.5 and 55% by weight.

As one of the preferable gas generating compositions, a composition comprising from 8 to 20% by weight of dicyandiamide, from 11.5 to 55% by weight of strontium nitrate, from 24.5 to 80% by weight of copper oxide and from 0.5 to 8% by weight of carboxymethyl cellulose sodium salt can be cited. The present invention is also to provide a gas generating composition comprising from 8 to 20% by weight of dicyandiamide, from 11.5 to 55% by weight of strontium nitrate, from 24.5 to 80% by weight of copper oxide and from 0.5 to 8% by weight of carboxymethyl cellulose sodium salt.

Next, a method for producing the molded article (II) of the gas generating composition in the present invention is described. Generally, for molding a gunpowder composition to have a specific thickness using a binder, a known method, for example, tableting or extrusion molding can be applied. Meanwhile, when a product is used as a gas generating agent for an air bag as in the present invention, it is advisable to provide a relatively thin molded article in view of the linear burning rate. Further, for imparting a necessary strength thereto, it is advisable that a molded article is molded into a single-hole cylindrical shape and this molding is conducted by applying a press-drawing molding method.

In the present invention, the gas generating composition was dry-mixed, water was added thereto, and slurry mixing was conducted until a uniform product was obtained. This was molded with a press-drawing molding machine having a mold, cut to an appropriate length, and dried to obtain the molded article (II) of the gas generating agent having such a performance that it can be applied satisfactorily to an air bag system.

The gas generating agent can be processed into a single-hole cylindrical shape shown in Fig. 6 by cutting the same to an appropriate length after the press-drawing molding. Further, it can be processed into a porous cylindrical shape having two or more through holes or a structure having one or two or more non-through holes. In addition, in the press-drawing molding method, it is possible to adjust the thickness by changing an inner diameter while maintaining a fixed outer diameter using a mold.

Such a shape makes it possible to suppress heat generation and conduct burning from the outer and inner surfaces of the cylindrical shape, and an excellent linear burning rate sufficient to apply to an air bag is obtained.

The outer diameter (R), the inner diameter (d) and the length (L) of the cylindrical molded article having one or two or more holes can be determined within the ranges capable of application to the gas generator. In the case of the single-hole cylindrical shape having one through hole, it is advisable that the outer diameter is 6 mm or less and the ratio (L/W) of the length to the thickness W = (R-d)/2 is 1 or more. In the case of the porous cylindrical shape having two or more through holes, it is advisable that the outer diameter is 60 mm or less and the ratio of the length to the thickness (a distance between holes when plural holes are equally arranged; an average amount of respective distances of holes when these are not equally arranged) is 1 or more. Further, in case of the structure having one or two or more non-through holes, it is advisable that the outer diameter is 60 mm or less and the ratio of the length to the thickness is 1 or more, and the thickness W' of the non-through hole portion is between 0.5 and 2 times the thickness W. When the molded article (II) of the present invention is used, it is burned within a desired combustion time even at a low linear burning rate. Further, with the combined use of the slag-forming agent, additional parts for heat removal are not needed, making it possible to downsize the gas generator itself.

A preferred embodiment of the process for producing the molded article (II) used in the present invention is described below. A composition mass is first formed by a kneading procedure using water at a ratio of from 10 to 30% of an increase based on a desired amount of a gas generating composition depending on a particle size and a bulk density of a starting material. The mixing order is not particularly instructed, and the order in which the highest safety is maintained in the production will do. Subsequently, after excess water is removed as required , the composition mass is passed through a mold of a fixed shape for a single-hole cylindrical shape, and extruded at a pressure of, usually, from 40 to 80 kg/cm², as required, from 130 to 140 kg/cm² to form a single-hole cylindrical strand. Further, before the surface of the strand becomes dry, the strand is cut to a desired length with a cutter, and then dried to be able to obtain the desired molded article (II). The linear burning rate of the gas generating composition is derived by burning the same in a 1-liter container purged with nitrogen at a pressure of 70 kgf/cm² and analyzing the change in the pressure inside the container recorded with a pressure sensor.

The shape of the molded article (II) is determined with the linear burning rate of the final composition. With respect to the composition having the linear burning rate of 10 mm/sec or there about or less, it is advisable to provide a single-hole cylindrical molded article having an outer diameter of from 1.5 to 3 mm φ and a length of from 0.5 to 5 mm. Especially with respect to the composition comprising 35% by weight of nitroguanidine, 50% by weight of strontium nitrate, 5% by weight of acid clay and 10% by weight of carboxymethyl cellulose sodium salt, it is advisable to provide a single-hole cylindrical molded article having an outer diameter of from 2.2 to 2.75 mm φ, an inner diameter of from 0.56 to 0.80 mm φ and a length of from 2.5 to 3.2 mm.

Further, the present invention is to provide also an inflator system using a molded article (II) of a gas generating agent for an air bag in which
A. a composition comprising:
   (a) from approximately 25 to 60% by weight of a nitrogen-containing organic compound,
   (b) from approximately 40 to 65% by weight of an oxidizer,
   (c) from approximately 1 to 20% by weight of a slag-forming agent, and
   (d) from approximately 3 to 12% by weight of a binder
B. is formed into a composition mass by a kneading procedure with the addition of water or a solvent,
C. the composition mass is extruded into a single-hole cylindrical shape through a mold under increased pressure, and
D. this is cut, and dried.

When the molded article (II) of the gas generating composition according to the present invention is used as an inflator system, there is no special limitation. It is most appropriate that the molded article (II) of the gas generating composition is combined with an inflator structure by which can turn the characteristics of the molded article (II) to advantage.

### EXAMPLES

The present invention is illustrated specifically with reference to Examples and Comparative Examples. However, the present invention is not restricted only to these Examples.

### Example 1

Water in an amount corresponding to 15 parts (hereinafter, parts indicate parts by weight)of the total amount of the composition was added to 31 parts of nitroguanidine, and these were mixed, and kneaded. Separately, 54 parts of strontium nitrate, 5 parts of acid clay and 10 parts of carboxymethyl cellulose sodium salt were dry-mixed. This mixture was added to the foregoing wet-mixed powder, and these were further kneaded. Then, the mixture kneaded was extruded through a mold having an outer diameter of 3.2 mm φ and an inner diameter of 0.80 mm φ at the pressure of 80 kg/cm² to form a single-hole cylindrical strand. Further, this strand was cut to a length of 4.0 mm with a cutter, and water was dried well to obtain a molded article (I) of a gas generating agent.

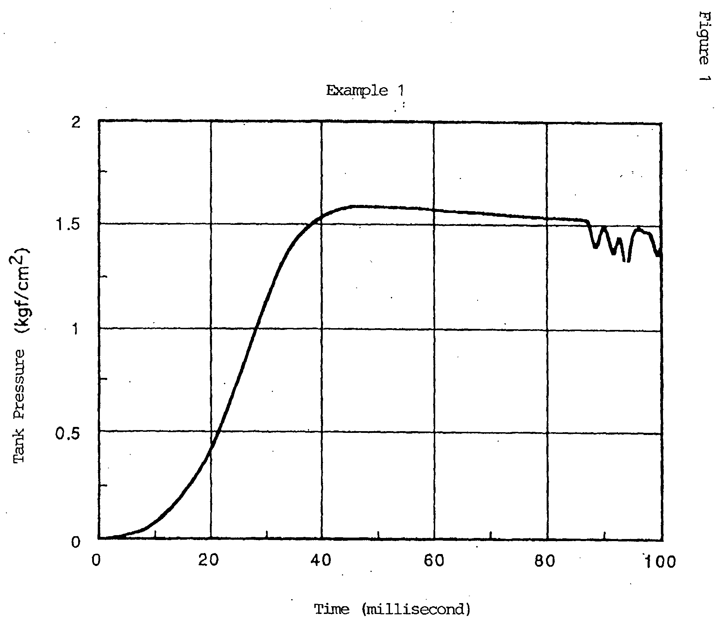

A 60-liter tank test was conducted at room temperature using 37 g of the resulting molded article (I) of the gas generating agent. The results are shown in Table 1. Further, the pressure-time curve obtained in the tank test is shown in Fig. 1.

As is apparent from the foregoing test results and Fig. 1, the tank pressure increase curve at the initial stage is moderate, and the desired pressure-time curve is obtained within a desired time when the maximum pressure is reached.

Further, the inside of the tank was very clean, and the gas concentrations of trace CO and NOx were within the requirement values of the automobile maker.

### Examples 2 and 3

A molded article(I) of a gas generating agent was obtained in the same manner as in Example 1 except that the strand was cut to a length shown in Table 1 with a cutter. With respect to the resulting molded article (I) of the gas generating agent, the evaluation was conducted as in Example 1. The results are shown in Table 1.

### Comparative Example 1

A molded article (I) of a gas generating agent was obtained in the same manner as in Example 1 except that the strand was cut to a length of 2.0 mm with a cutter. With respect to the resulting molded article of the gas generating agent, the evaluation was conducted as in Example 1. The results are shown in Table 1.

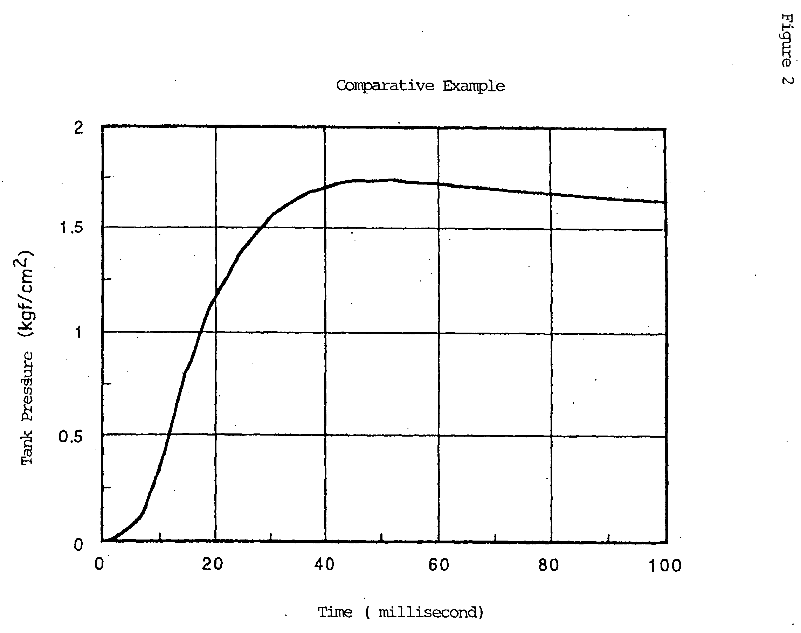

Further, a pressure-time curve obtained in the tank test is shown in Fig. 2

As is apparent from the foregoing test results and Fig. 2, the tank pressure increase curve at the initial stage exceeds the desired pressure value, and is sharp as compared with that in Example 1, so that a possible damage to passengers is high.

### Example 4

Water in an amount corresponding to 15 parts (hereinafter parts are parts by weight) based on the total amount of the composition was added to 35 parts of nitroguanidine (hereinafter abbreviated as "NQ") having a high specific gravity, and these were mixed, and kneaded. Separately, 50 parts of strontium nitrate, 5 parts of acid clay and 10 parts of carboxymethyl cellulose sodium salt were dry-mixed. This mixture was added to the foregoing wet-mixed powder, and these were further kneaded. Then, the mixture kneaded was extruded through a mold having an outer diameter of 2.5 mm φ and an inner diameter of 0.80 mm φ at the pressure of 80 kg/cm² to form a single-hole cylindrical strand. Further, this strand was cut to a length of 2.12 mm with a cutter, and water was dried well to obtain a molded article (II) of a gas generating agent. The results of a 60-liter tank test at room temperature using 38 g of the resulting molded article (II) of the gas generating agent are shown below. Incidentally, the linear burning rate of the gas generating composition was 8.1 mm/sec. The maximum tank pressure was 1.83 kg/cm², and the period of time taken to reach the maximum pressure was 55 milliseconds.

Further, an amount of a mist in the tank was 700 mg or less, and the inside of the tank was very clean. The gas concentrations of trace CO and NOx were within the requirement values of the automobile maker.

### Examples 5 to 7 and Comparative Examples 2 to 4

The molded article (II) of the gas generating agent was produced as in Example 4 except that parts by weight of each component and the shape of the molded article were changed as shown in Table 2.

The total heat amount provided when using the linear burning rate of the gas generating composition in each of Examples 4 to 7 and Comparative Examples 2 to 4 and the amount of the composition required to generate a fixed amount of the gas are shown in Table 3.

The results of the tank test are shown in Table 4.

### Example 8

Powders of 12 parts of dicyandiamide, 53 parts of strontium nitrate, 30 parts of copper oxide and 5 parts of carboxymethyl cellulose sodium salt were dry-mixed well. Further, 12.5 parts of water were added thereto, and slurry mixing was conducted until the mixture became satisfactorily uniform. After the slurry mixing, the mixture was press-elongated at a press-drawing molding pressure of from 60 to 70 kgf/cm² and a press-drawing molding velocity of approximately 0.2 cm/min using a press-drawing molding machine having a mold 1.6 mm φ in outer diameter and 0.56mm φ in inner diameter, and the product was cut to a length of approximately 5 mm. After the cutting, the product cut was dried at 50 °C for 15 hours or more to form a gas generating composition (linear burning rate 7.4 mm/sec, total heat amount 22.2 Kcal). The gas generating composition was obtained in a weight yield of 80% or more. A predetermined tank test (method described in JP-B 52-3620 and JP-B 64-6156) was conducted using 54 g of this gas generating composition. The tank pressure was 1.22 kg/cm², and the period of time taken to reach the maximum pressure was 50 milliseconds. These values were within the desired ranges in which the composition was put to practical use without damaging the metallic heat remover and the filter.

### Example 9

A gas generating composition was prepared in quite the same manner as in Example 5 except that the amount of dicyandiamide was changed to 10 parts, the amount of strontium nitrate to 35 parts, the amount of copper oxide to 50 parts and the amount of carboxymethyl cellulose sodium salt to 5 parts respectively and that the weight of the composition was set to be 65g (linear burning rate 7.6 mm/sec, total heat amount 22.1 Kcal), and the tank test was conducted as in Example 5. The tank pressure was 1.31 kg/cm², and the period of time taken to reach the maximum pressure was reached was 55 milliseconds. These values were within the desired ranges in which the composition was put to practical use without damaging the metallic heat remover and the filter.

### Example 10

A gas generating composition was prepared in the same manner as in Example 5 except that the amount of dicyandiamide was changed to 13 parts, the amount of strontium nitrate to 32 parts, the amount of copper oxide to 50 parts and the amount of carboxymethyl cellulose sodium salt to 5 parts respectively, and molded with an outer diameter of 1.15 mm φ, an inner diameter of 0.34mm φ and a length of 0.52 mm (linear burning rate 6.1 mm/sec, total heat amount 22.2 Kcal). The tank test was conducted as in Example 5 using 67 g of this molded article. The tank pressure was 1.67 kg/cm², and the period of time taken to reach the maximum pressure was 47 milliseconds. The results capable of adjusting the performance in a wider range were obtained without damaging the metallic heat remover and the filter.

### Comparative Example 5

The slurry mixing was conducted using exactly the same formulation as in Example 8. After the slurry mixing, the mixture was molded into thin pellets having a diameter of 5 mm φ and a thickness of 1 mm with an ordinary pelletizing machine. The weight yield of the thin pellets based on the starting weight was 20% or less, and the pellets did not show a practical strength.

### Comparative Example 6

Powders of 23 parts of dicyandiamide, 57 parts of strontium nitrate and 20 parts of copper oxide were uniformly mixed well with the addition of 10 parts of water. After the moisture conditioning, the mixture was molded into thin pellets having a diameter of 5 mm φ and a thickness of 2 mm with an ordinary pelletizing machine (linear burning rate 24.0 mm/sec, total heat amount 28.6 Kcal). The tank test was conducted in the same manner as in Example 5 using 50 g of the composition. Consequently, since the filter was heavily damaged, a desired tank pressure could not be obtained.

### Comparative Example 7

Pellets were produced in exactly the same manner as in Comparative Example 2 except that the amount of dicyandiamide was changed to 19 parts, the amount of potassium nitrate to 31 parts and the amount of copper oxide to 50 parts respectively (linear burning rate 9.1 mm/sec, total heat amount 25.3 Kcal). The tank test was conducted as in Example 5 using 60 g of the molded article. The period of time taken to complete the combustion was 100 milliseconds or more, and it could not satisfy the practical performance.

The linear burning rate of the gas generating composition in each of Examples 8 to 10 and the amount of the composition necessary to provide a fixed amount of gas generation are shown in Table 5.

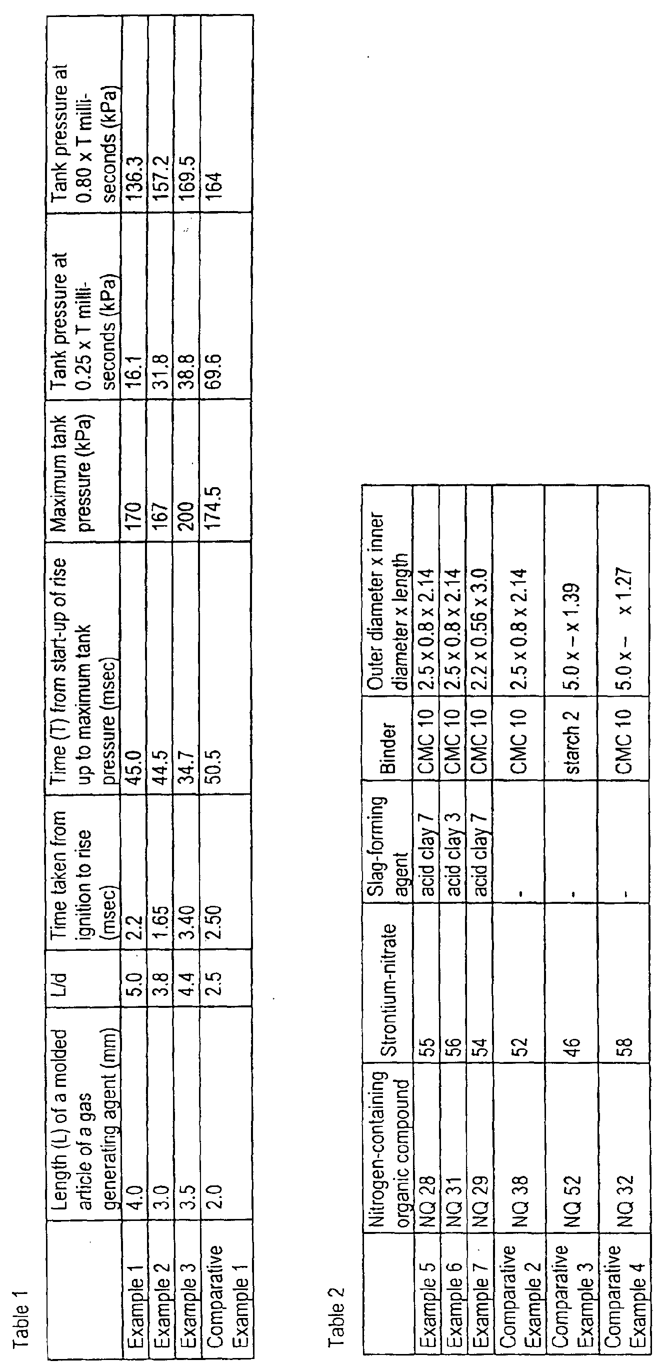

**Table 3**

| | Linear burning rate (mm/sec) | Total heat amount (Kcal) |
|---|---|---|
| Example 4 | 8.1 | 28.2 |
| Example 5 | 10.0 | 33.3 |
| Example 6 | 9.4 | 31.9 |
| Example 7 | 9.3 | 30.2 |
| Comparative Example 2 | 7.3 | 31.1 |
| Comparative Example 3 | 7.8 | 27.8 |
| Comparative Example 4 | 8.5 | 31.1 |

**Table 4**

| Composition | Amount | Maximum tank pressure | Time taken to reach the maximum pressure | Amount of mist | Gas concentrations of CO and NOx |
|---|---|---|---|---|---|
| Example 5 | 44.6 | 1.95 | 58 | same as in Example 1 | NOx level is slightly higher than in Example 1, but within the permissible range. |
| Example 6 | 43.0 | 3.05 | 48 | same as in Example 1 | CO and NOx levels are lowest. |
| Example 7 | 40.6 | 1.44 | 62 | same as in Example 1 | NOx level is higher than in Example 2. |
| Comparative Example 2 | 41.8 | 2.24 | 38 | Amount of mist is large and inside of tank is dirty. | NOx level is high. |
| Comparative Example 3 | 37.4 | 0.52 | 50 | | Combustion is not conducted well. |
| Comparative Example 4 | 41.9 | The inflator is broken. | | | |

**Table 5**

| | Gas generating composition (component/wt.%) | | | Linear burning rate (mm/sec) | Total heat amount (Kcal) | Necessary amount of composition (g) |
|---|---|---|---|---|---|---|
| | Nitrogen-containing organic compound | oxidizer | binder | | | |
| Ex.8 | DCDA/10 | Sr(NO₃)₂/45 CuO/40 | CMC/5 | 6.2 | 20.5 | 64.0 |
| Ex.9 | DCDA/17 | Sr(NO₃)₂/48 CuO/30 | CMC/5 | 7.2 | 23.8 | 72.2 |
| Ex. 10 | DCDA/13 | Sr(NO₃)₂/35 CuO/50 | CMC/2 | 8.3 | 21.5 | 65.9 |
| Ex. - Example | | | | | | |

## Claims

1. A molded article of a gas generating composition for an air bag which is a molded article formed of a non-azide gas generating composition, wherein it has a shape having a hole or holes, and when a length of one molded article having a hole is L (mm) and an inner diameter of the hole of the molded article is d (mm), the value of d is between 0.2 and 1.5 (mm) and the value of L/d is 1.5 or more.

2. The molded article according to claim 1, wherein the length L of the molded article is between 1.5 and 30 mm, and the inner diameter d of the hole is between 0.4 and 1.0 mm.

3. The molded article according to claim 1, wherein the non-azide gas generating composition comprises a nitrogen-containing compound, an oxidizer, a slag-forming agent and a binder.

4. The molded article of a gas generating composition for an air bag, wherein, when a desired maximum tank pressure is P (kPa) and a period of time from the start-up of rise of the tank pressure up to the time when the maximum tank pressure P (kPa) has been reached is T milliseconds in a tank combustion test with a gas generator using the molded article of the gas generating composition according to any one of claims 1 to 3, the tank pressure at 0.25 x T milliseconds is adjusted to 0.25 x P (kPa) or less.

5. The molded article of a gas generating composition for an air bag according to claim 4, wherein in the tank combustion test, the tank pressure at 0.80 x T milliseconds is adjusted to 0.70 x P (kPa) or more.

6. The molded article of a gas generating composition for an air bag, wherein, when a desired maximum tank pressure is P (kPa) and a period of time from the start-up of rise of the tank pressure up to time when the maximum tank pressure P (kPa) has been reached is T milliseconds in a tank combustion test with a gas generator using the molded article of the gas generating composition according to claim 1, the tank pressure at 0.25 x T milliseconds is adjusted to 0.20 x P (kPa) or less, and the tank pressure at 0.80 x T milliseconds is adjusted to 0.70 x P (kPa) or more.

7. A gas generator system for an air bag using the molded article according to claim 1, wherein, when a desired maximum tank pressure is P (kPa) and a period of time from the start-up of rise of the tank pressure up to the time when the maximum tank pressure P (kPa) has been reached is T milliseconds in a tank combustion test with a gas generator, the tank pressure at 0.25 x T milliseconds is 0.20 x P (kPa) or less, and the tank pressure at 0.80 x T milliseconds is 0.70 x P (kPa) or more.

8. The gas generator system for an air bag according to claim 7, wherein the gas generator comprises a housing having plural gas discharge ports, an ignition means installed in the housing, a gas generating means to be ignited by the ignition means and generate a combustion gas and a combustion chamber storing the gas generating means.

9. The gas generator system for an air bag according to claim 7, wherein the maximum tank pressure P (kPa) is between 110 and 220 (kPa), and the period of time T from the start-up of rise of the tank pressure up to the time when the maximum tank pressure P (kPa) has been reached is between 30 and 65 milliseconds.

10. A gas generator for an air bag which comprises a housing having plural gas discharge ports, an ignition means installed in the housing, a gas generating means to be ignited by the ignition means and generate a combustion gas, and a combustion chamber storing the gas generating means, wherein the operational performance is such that when a desired maximum tank pressure is P (kPa) and a period of time from the start-up of rise of the tank pressure up to the time when the maximum tank pressure P (kPa) has been reached is T milliseconds in a tank combustion test with said gas generator, the tank pressure at 0.25 x T milliseconds is 0.25 x P (kPa) or less.

11. The gas generator for an air bag according to claim 10, wherein in the tank combustion test, the tank pressure at 0.80 x T milliseconds is 0.70 x P (kPa) or more.

12. A gas generator for an air bag which comprises a housing having plural gas discharge ports, an ignition means installed in the housing, a gas generating means to be ignited by the ignition means and generate a combustion gas and a combustion chamber for storing the gas generating means, wherein the operational performance is such that when a desired maximum tank pressure is P (kPa) and a period of time from the start-up of rise of the tank pressure up to the time when the maximum tank pressure P (kPa) has been reached is T milliseconds in a tank combustion test with said gas generator, the tank pressure at 0.25 x T milliseconds is 0.20 x P (kPa) or less, and the tank pressure at 0.80 x T milliseconds is 0.70 x P (kPa) or more.

13. The gas generator for an air bag according to claim 10, wherein the maximum tank pressure P (kPa) is between 110 and 220 (kPa), and the time T that is a period of time from the start-up of rise of the tank pressure up to the time when the maximum tank pressure P (kPa) has been reached is between 30 and 65 milliseconds.

14. A molded article of a gas generating agent for an air bag, wherein the gas generating composition is molded into a cylindrical shape having one or two or more holes, and a relationship of a linear burning rate r (mm/sec) of the gas generating composition at the pressure of 70 kgf/cm² and a thickness W (mm) of the molded article is within the range represented by 0.005 ≤ W/ (2^{.}r) ≤ 0.1.

15. The molded article of a gas generating agent for an air bag according to claim 14, wherein the gas generating composition of which the linear burning rate at the pressure of 70 kgf/cm² is in the range of from 1 to 12.5 mm/sec is molded into a cylindrical shape having one or two or more holes.

16. The molded article of a gas generating agent for an air bag according to claim 14, wherein the linear burning rate at the pressure of 70 kgf/cm² is in the range of from 5 to 12.5 mm/sec.

17. The molded article of a gas generating agent for an air bag according to claim 14, wherein the cylindrical molded article having one or two or more holes has an outer diameter of 6 mm or less and a length to thickness ratio of 1 or more.

18. The molded article of a gas generating agent for an air bag according to claim 14, wherein the cylindrical molded article having one or two or more holes has an outer diameter of from 1.5 to 3 mm and a length of from 0.5 to 5 mm.

19. A molded article of a gas generating agent for an air bag according to claim 14, wherein the gas generating composition is obtained by adding a binder and as required, a slag-forming agent to a nitrogen-containing organic compound and an oxidizer.

20. A process for producing a molding product of a gas generating composition for an air bag, which comprises steps of adding a binder and, as required, a slag-forming agent to a nitrogen-containing organic compound and an oxidizer to obtain a gas generating composition with liner burning rate of between 1 to 12.5 mm/sec. at the pressure of 70 kgf/cm², and then press-drawing molding the composition to form into the cylindrical shape having one or two or more holes.

21. A gas generator system, wherein the molded article of the gas generating composition for use in the air bag according to claim 14 is used as a gas generating agent.
